# FASCICULE DE BREVET EUROPEEN

(11) **EP 4 540 454 B1**
(45) Date de publication et mention de la délivrance du brevet: **15.04.2026**
(21) Numéro de dépôt: 23729439.2
(22) Date de dépôt: 12.06.2023
(51) Int. Cl.: D07B 1/06

(54) **CÂBLE MULTI-TORONS À DEUX COUCHES DE MULTI-TORONS**
MEHRADRIGES KABEL MIT ZWEI MEHRADRIGEN SCHICHTEN
MULTI-STRAND CABLE WITH TWO MULTI-STRAND LAYERS

(30) Priorité: 20.06.2022 FR 2205997
(43) Date de publication de la demande: 23.04.2025
(73) Titulaire: COMPAGNIE GENERALE DES ETABLISSEMENTS MICHELIN, 63000 Clermont-Ferrand (FR)
(72) Inventeur: LAURENT, Stéphane, 63040 CLERMONT-FERRAND CEDEX 09 (FR); BARBAT, Romain, 63040 CLERMONT-FERRAND CEDEX 09 (FR); CHEVALLEY, Marianna, 63040 CLERMONT-FERRAND CEDEX 09 (FR); GIANETTI, Alexandre, 63040 CLERMONT-FERRAND CEDEX 09 (FR); PINAUT, Rémi, 63040 CLERMONT-FERRAND CEDEX 09 (FR)
(74) Mandataire: M.F.P. Michelin
(86) Numéro de dépôt international: PCT/EP2023/065578
(87) Numéro de publication internationale: WO 2023/247234

(56) Documents cités:
- WO-A1-2013/174896
- WO-A1-2016/131862
- WO-A1-2019/122721
- FR-A1- 2 897 076
- FR-A1- 2 969 181

## Description

L'invention concerne des câbles et un pneumatique comprenant ces câbles.

On connait de l'état de la technique, des câbles présentant une structure (1+6)x (3+8) tel que décrit dans le document FR2969181 lettre B. Ces câbles comprennent 6 torons enroulés en hélice autour d'un toron à un pas de 60 mm. Chaque toron comprend, d'une part, une couche interne de 3 fils internes enroulés en hélice à un pas 7,7 mm et une couche externe de 8 fils externes enroulés en hélice autour de la couche interne à un pas 15,4 mm. L'allongement structural du câble est inférieur à 2% et la force à rupture est de 19 600 N.

Ces câbles sont des câbles rigides, ils ont l'avantage de soulager en tension les nappes de travail mais d'accroître très substantiellement la rigidité circonférentielle de la structure, amenant une sensibilité accrue du bloc sommet aux agressions au centre de la bande de roulement lorsqu'ils sont placés au niveau de l'armature additionnelle.

Un câble multi-torons à deux couches est décrit dans le document WO 2013/174896 A1.

Aujourd'hui, un besoin se dessine pour le développement de nouveaux câbles pour des applications en nappes sommets, en particulier des nappes avec des angles de pose inférieurs à 10° telles que l'armature additionnelle. Cette armature a pour but de soulager en tension les nappes de travail, d'accroître la performance d'endurance du pneumatique, tout spécialement la résistance au clivage.

L'invention a pour but un câble ayant un bon compromis de rigidité : assez souple pour diminuer la rigidité du bloc sommet avec une force à rupture suffisante pour tenir les sollicitations en extension.

A cet effet l'invention a pour objet un câble multi-torons à deux couches de multi-torons, dans lequel le câble comprend :
- une couche interne du câble constituée de X=3 ou 4 multi-torons comprenant K=2, 3 ou 4 torons enroulés en hélice autour d'un axe, chaque toron étant à au moins deux couches comprenant:
   - une couche interne constituée de Q1 fil(s) métallique(s) interne(s) de diamètre d1, et
   - une couche externe constituée de Q3 fils métalliques externes de diamètre d3 enroulés autour de la couche interne ; et
   - une couche externe du câble constituée de Y>1 multi-torons enroulés autour de la couche interne du câble, chaque multi-torons comprenant L=2, 3 ou 4 torons enroulés en hélice autour d'un axe, chaque toron étant à au moins à deux couches comprenant:
      - une couche interne constituée de Q1' fil(s) métallique(s) interne(s) de diamètre d1', et
      - une couche externe constituée de Q3' fils métalliques externes de diamètre d3' enroulés autour de la couche interne,

avec les multi-torons de la couche interne et de la couche externe étant enroulés en hélice autour d'un axe principal ,et
le câble présente un allongement structural As tel que As ≥ 1,0%, l'allongement structural As étant déterminé selon la norme ASTM D2969-04 de 2014 au câble de façon à obtenir une courbe force-allongement, l'allongement structural As étant égal à l'allongement, en %, correspondant à l'intersection entre la tangente à la partie élastique de la courbe force-allongement en un point quelconque de sa partie élastique et l'axe des allongements de la courbe force-allongement.

Grâce à cette configuration de câble multi-torons à deux couches de multi-torons, le câble selon l'invention permet d'obtenir un câble avec suffisamment d'allongement structural apportant une souplesse en extension et suffisamment de masse métal, tout en gardant des fils fins pour la souplesse en flexion, pour améliorer le compromis entre les cisaillements dans la matrice polymérique, la souplesse et la résistance du bloc sommet et ainsi améliorer le compromis de performance agression et clivage.

L'allongement structural As, grandeur bien connue de l'homme du métier, est déterminé par exemple en appliquant la norme ASTM D2969-04 de 2014 à un câble testé de façon à obtenir une courbe force-allongement. On déduit l'As sur la courbe obtenue comme l'allongement, en %, correspondant à l'intersection entre la tangente à la partie élastique de la courbe force-allongement et l'axe des allongements de la courbe force-allongement. Pour rappel, une courbe force allongement comprend, en se déplaçant vers les allongements croissants, une partie structurale, une partie élastique et une partie plastique. La partie structurale correspond à un allongement structural du câble résultant du rapprochement des différents torons et fils métalliques constituants le câble. La partie élastique correspond à un allongement élastique résultant de la construction du câble, notamment des angles des différentes couches et des diamètres des fils métalliques. La partie plastique correspond à l'allongement plastique résultant de la plasticité (déformation irréversible au-delà de la limite d'élasticité) des fils métalliques.

Dans l'invention, le câble comprend deux couches de multi-torons, c'est-à-dire qu'il comprend un assemblage constitué d'une couche de Y>1 multi-torons enroulé autour d'une seule couche de multi-torons, ni plus ni moins, c'est-à-dire que l'assemblage possède deux couches de multi-torons, pas une, pas trois, mais uniquement deux.

Dans l'invention, le multi-torons est à une couche de torons, c'est-à-dire qu'il comprend un assemblage constitué d'une couche de toron, ni plus ni moins, c'est-à-dire que l'assemblage a une couche de toron, pas zéro, pas deux, mais uniquement une.

Dans un mode de réalisation, les multi-torons internes du câble sont entourés d'une composition polymérique puis de la couche externe.

Avantageusement, chaque toron est à couches cylindriques.

Avantageusement, chaque toron dans le multi-torons est à deux couches, c'est-à-dire qu'il comprend un assemblage constitué de deux couches de fils métalliques, ni plus ni moins, c'est-à-dire que l'assemblage a deux couches de fils métalliques, pas une, pas trois, mais uniquement deux. La couche externe de chaque toron est enroulée autour de la couche interne de ce toron au contact de la couche interne de ce toron.

De façon très avantageuse, chaque toron de la couche interne et chaque toron de la couche externe sont à couches cylindriques. On rappelle que de telles couches cylindriques sont obtenues lorsque les différentes couches de torons sont enroulées à des pas différents et/ou lorsque les sens d'enroulement de ces couches sont distincts d'une couche à l'autre. Un toron à couches cylindriques est très fortement pénétrable contrairement à un toron à couches compactes dans lequel les pas de toutes les couches sont égaux et les sens d'enroulement de toutes les couches sont identiques qui présente une pénétrabilité bien plus faible.

Avantageusement, chaque toron de la couche interne et chaque toron de la couche externe sont désaturés, c'est-à-dire qu'il existe un espace entre les fils de couche externe, permettant à la composition élastomérique d'imprégner chaque toron.

De préférence, les torons ne subissent pas de préformation.

Avantageusement, le câble tel que défini ci-dessus est nu c'est-à-dire dépourvu de toute composition polymérique, notamment le câble est dépourvu de toute composition élastomérique.

Par fil métallique, on entend un monofilament métallique comprenant une âme constituée majoritairement (c'est-à-dire pour plus de 50% de sa masse) ou intégralement (pour 100% de sa masse) d'un matériau métallique, par exemple en acier au carbone. Le fil métallique peut avantageusement comprendre une couche d'un revêtement métallique revêtant l'âme, le revêtement métallique étant choisi parmi le zinc, le cuivre, l'étain et les alliages de ces métaux, par exemple le laiton. Chaque fil est préférentiellement en acier perlitique ou ferrito-perlitique au carbone.

Les valeurs des caractéristiques décrites dans la présente demande pour le câble nu sont mesurées sur ou déterminées à partir des câbles directement après fabrication, c'est-à-dire avant toute étape de noyage dans une matrice polymérique, notamment élastomérique.

Dans la présente demande, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Avantageusement, As ≥ 1,5% et de préférence As ≥ 2,0%.

L'invention a également pour objet un câble extrait d'une matrice polymérique dans lequel le câble extrait comprend :
- une couche interne du câble constituée de X=3 ou 4 multi-torons comprenant K=2, 3 ou 4 torons enroulés en hélice autour d'un axe principal, chaque toron étant à au moins deux couches comprenant:
   - une couche interne constituée de Q1 fil(s) métallique(s) interne(s) de diamètre d1, et
   - une couche externe constituée de Q3 fils métalliques externes de diamètre d3 enroulés autour de la couche interne; et
   - une couche externe du câble constituée de Y>1 multi-torons enroulés autour de la couche interne du câble, chaque multi-torons comprenant L=2, 3 ou 4 torons enroulés en hélice autour d'un axe, chaque toron étant à au moins à deux couches comprenant:
      - une couche interne constituée de Q1' fil(s) métallique(s) interne(s) de diamètre d1', et
      - une couche externe constituée de Q3' fils métalliques externes de diamètre d3' enroulés autour de la couche interne,

avec les multi-torons de la couche interne et de la couche externe étant enroulés en hélice autour d'un axe principal, et
le câble présente un allongement structural As' tel que As' ≥ 0,3%, l'allongement structural As' étant déterminé selon la norme ASTM D2969-04 de 2014 au câble de façon à obtenir une courbe force-allongement, l'allongement structural As' étant égal à l'allongement, en %, correspondant à l'intersection entre la tangente à la partie élastique de la courbe force-allongement en un point quelconque de sa partie élastique et l'axe des allongements de la courbe force-allongement.

De préférence, la matrice polymérique est une matrice élastomérique.

La matrice polymérique, de préférence élastomérique, est à base d'une composition polymérique, de préférence élastomérique.

Par matrice polymérique, on entend une matrice comprenant au moins un polymère. La matrice polymérique est ainsi à base d'une composition polymérique.

Par matrice élastomérique, on entend une matrice comprenant au moins un élastomère. La matrice élastomérique préférentielle est ainsi à base de la composition élastomérique.

Par l'expression "à base de", il faut entendre que la composition comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères.

Par composition élastomérique, on entend que la composition comprend au moins un élastomère et au moins un autre composant. De préférence, la composition comprenant au moins un élastomère et au moins un autre composant comprend un élastomère, un système de réticulation et une charge. Les compositions utilisables pour ces nappes sont des compositions conventionnelles pour calandrage d'éléments filaires de renfort et comprennent un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs. L'adhésion entre les fils métalliques et la matrice dans laquelle ils sont noyés est assurée par exemple par un revêtement métallique, par exemple une couche de laiton.

Les valeurs des caractéristiques décrites dans la présente demande pour le câble extrait sont mesurées sur ou déterminées à partir de câbles extrait d'une matrice polymérique, notamment élastomérique, par exemple d'un pneumatique. Ainsi, par exemple sur un pneumatique, on retire la bande de matière radialement à l'extérieur du câble à extraire de façon à apercevoir le câble à extraire affleurer radialement de la matrice polymérique. Ce retrait peut se faire par décorticage aux moyens de pinces et de couteaux ou bien par rabotage. Puis, on dégage l'extrémité du câble à extraire au moyen d'un couteau. Puis, on tire sur le câble de façon à l'extraire de la matrice en appliquant un angle relativement faible de façon à ne pas plastifier le câble à extraire. Les câbles extraits sont alors nettoyés soigneusement, par exemple au moyen d'un couteau, de façon à détacher les restes de matrice polymérique accrochés localement au câble et en prenant soin de ne pas dégrader la surface des fils métalliques.

Les caractéristiques avantageuses décrites ci-dessous s'appliquent indifféremment au câble tel que défini ci-dessus et au câble extrait.

De façon préférée, le câble présente un diamètre du câble tel que le diamètre D du câble va de 4 mm à 10 mm, de préférence de 5 mm à 8mm.

Par définition, le diamètre d'un toron est le diamètre du plus petit cercle dans lequel est circonscrit le toron.

De façon préférée, les diamètres des fils métalliques vont indépendamment les uns des autres, de 0,15 mm à 0,50 mm, de préférence de 0,18 mm à 0,35 mm et plus préférentiellement de 0,20 mm à 0,30 mm.

De préférence, les fils d'une même couche d'un toron prédéterminé présentent tous sensiblement le même diamètre. Avantageusement, les torons externes présentent tous sensiblement le même diamètre. Par « sensiblement le même diamètre», on entend que les fils ou les torons ont le même diamètre aux tolérances industrielles près.

Avantageusement, Y est égal à 6, 7, 8, 9 ou 10, de préférence Y=6, 7 ou 8 et plus préférentiellement Y=6.

Avantageusement, K= 2, 3 ou 4, de préférence K=3 ou 4.

Avantageusement, L= 2,3 ou 4 et de préférence L =3 ou 4.

Dans un premier mode de réalisation, chaque toron de la couche interne est à deux couches.

Avantageusement, chaque toron de la couche externe est à deux couches.

Avantageusement, dans ce premier mode de réalisation, dans une variante préférée, chaque toron des couches interne et externe est à deux couches.

Dans un deuxième mode de réalisation, chaque toron de la couche interne est à trois couches et comprend :
une couche intermédiaire constituée de Q2 fils métalliques intermédiaires enroulés autour de la couche interne, et
une couche externe constituée de Q3 fils métalliques externes enroulés autour de la couche intermédiaire.

Avantageusement, chaque toron de la couche externe est à trois couches (et comprend :
une couche intermédiaire constituée de Q2' fils métalliques intermédiaires enroulés autour de la couche interne, et
une couche externe constituée de Q3' fils métalliques externes enroulés autour de la couche intermédiaire.

Avantageusement, dans ce deuxième mode de réalisation, dans une variante préférée, chaque toron des couches interne et externe est à trois couches.

Avantageusement, chaque toron est du type non gommé in situ. Par non gommé in situ, on entend qu'avant assemblage des torons entre eux, chaque toron est constitué des fils des différentes couches et dépourvu de composition polymérique, notamment de composition élastomérique.

### Torons des multi-torons internes du câble selon l'invention

Avantageusement, Q1=1, 2, 3 ou 4, de préférence Q1=1, 2 ou 3 et plus préférentiellement Q1=1 ou 3.

Avantageusement, Q3=5, 6, 7,8, 9 ou 10, de préférence Q3=6, 7, 8 ou 9 et plus préférentiellement Q3 =6 ou 9.

Dans un mode de réalisation, Q1=1.

Avantageusement, Q3 =5, 6 ou 7 et de préférence Q3=6.

Dans un autre mode de réalisation préféré, Q1>1, de préférence Q1=2, 3 ou 4.

Avantageusement, Q3 =7, 8, 9 ou 10 et de préférence Q3=7, 8 ou 9.

Dans une première variante, Q1=2 et Q3=7 ou 8, de préférence Q1=2, Q3=7.

Dans une deuxième variante, Q1=3 et Q3=7, 8 ou 9, de préférence Q1=3, Q3=8.

Dans une troisième variante, Q1=4 et Q3=7, 8,9 ou 10, de préférence Q1=4, Q3=9.

### Torons des multi-torons externes du câble selon l'invention

Avantageusement, Q1'=1, 2, 3 ou 4, de préférence Q1'=1, 2 ou 3 et plus préférentiellement Q1'=1 ou 3.

Avantageusement, Q3'=5, 6, 7,8, 9 ou 10, de préférence Q3'=6, 7, 8 ou 9 et plus préférentiellement Q3' = 6 ou 9.

Dans un mode de réalisation, Q1'=1.

Avantageusement, Q3' =5, 6 ou 7 et de préférence Q3'=6.

Dans un autre mode de réalisation préféré, Q1'>1, de préférence Q1'=2, 3 ou 4.

Avantageusement, Q3' =7, 8, 9 ou 10 et de préférence Q3'=7, 8 ou 9.

Dans une première variante, Q1'=2 et Q3'=7 ou 8, de préférence Q1'=2, Q3'=7.

Dans une deuxième variante, Q1'=3 et Q3'=7, 8 ou 9, de préférence Q1'=3, Q3'=8.

Dans une troisième variante, Q1'=4 et Q3'=7, 8, 9 ou 10, de préférence Q1'=4, Q3'=9.

Avantageusement, Q1=1 et Q3=6, Q1'= 1 et Q3'=6.

### PRODUIT RENFORCE SELON L'INVENTION

Un autre objet de l'invention est un produit renforcé comprenant une matrice polymérique et au moins un câble ou câble extrait tel que défini précédemment.

Avantageusement, le produit renforcé comprend un ou plusieurs câbles selon l'invention noyés dans la matrice polymérique, et dans le cas de plusieurs câbles, les câbles sont agencés côte à côte selon une direction principale.

### PNEUMATIQUE SELON L'INVENTION

Un autre objet de l'invention est un pneumatique comprenant au moins un câble extrait ou un produit renforcé tel que défini ci-dessus.

Par pneumatique comprenant un câble extrait, on entend un pneumatique comprenant un câble dont les propriétés, mesurées après extraction du pneumatique, sont celles du câble extrait, ce câble étant, préalablement à son incorporation au pneumatique, un câble tel que le câble décrit précédemment.

De préférence, le pneumatique comporte une armature de carcasse ancrée dans deux bourrelets et surmontée radialement par une armature de sommet elle-même surmontée d'une bande de roulement, l'armature de sommet étant réunie auxdits bourrelets par deux flancs et comportant au moins un câble tel que défini ci-dessus.

Dans un mode de réalisation préféré, l'armature de sommet comprend une armature de protection, une armature de travail et une armature additionnelle, l'armature additionnelle comprenant au moins un câble tel que défini ci-dessus l'armature additionnelle faisant un angle au plus égal à 10°, de préférence allant de 5° à 10° avec la direction circonférentielle Z du pneumatique et étant radialement intercalée entre l'armature de travail et l'armature de carcasse.

Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.

De manière préférentielle, le pneumatique est pour véhicule de type génie civil. Ainsi, le pneumatique présente une dimension dans laquelle le diamètre, en pouces, du siège de la jante sur laquelle le pneumatique est destiné à être monté est supérieur ou égal à 40 pouces.

L'invention concerne également un article de caoutchouc comprenant un assemblage selon l'invention, ou un assemblage imprégné selon l'invention. Par article de caoutchouc, on entend tout type d'article de caoutchouc tel qu'un ballon, un objet non pneumatique tel qu'un bandage non pneumatique, une bande transporteuse ou une chenille. L'invention sera mieux comprise à la lecture des exemples qui vont suivre, donnés uniquement à titre d'exemples non limitatifs et faite en se référant aux dessins dans lesquels :
- la figure 1 est une vue en coupe perpendiculaire à la direction circonférentielle d'un pneumatique selon l'invention ;
- la figure 2 est une vue de détails de la zone II de la figure 1 ;
- la figure 3 est une vue en coupe d'un produit renforcé selon l'invention ;
- la figure 4 est une vue schématique en coupe perpendiculaire à l'axe du câble (supposé rectiligne et au repos) d'un câble (50) selon un premier mode de réalisation de l'invention ;
- la figure 5 est une vue schématique en coupe perpendiculaire à l'axe du câble (supposé rectiligne et au repos) d'un câble extrait (50') selon un premier mode de réalisation de l'invention ; et
- la figure 6 est une vue analogue à celle de la figure 4 d'un câble (60) selon un deuxième mode de réalisation l'invention.

### EXEMPLE DE PNEUMATIQUE SELON L'INVENTION

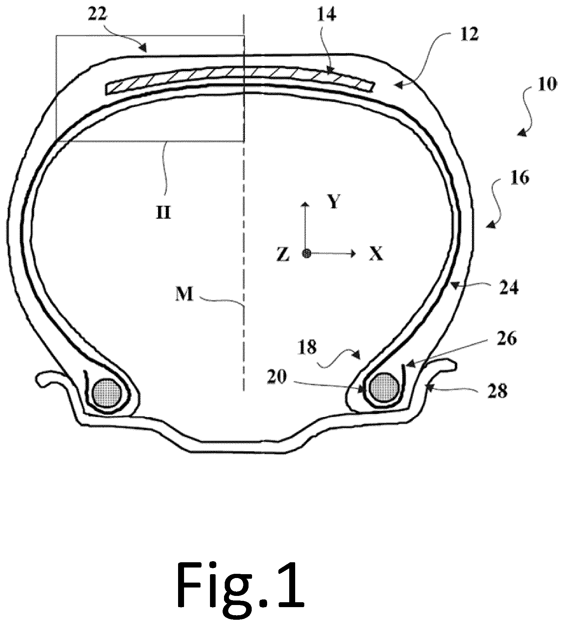

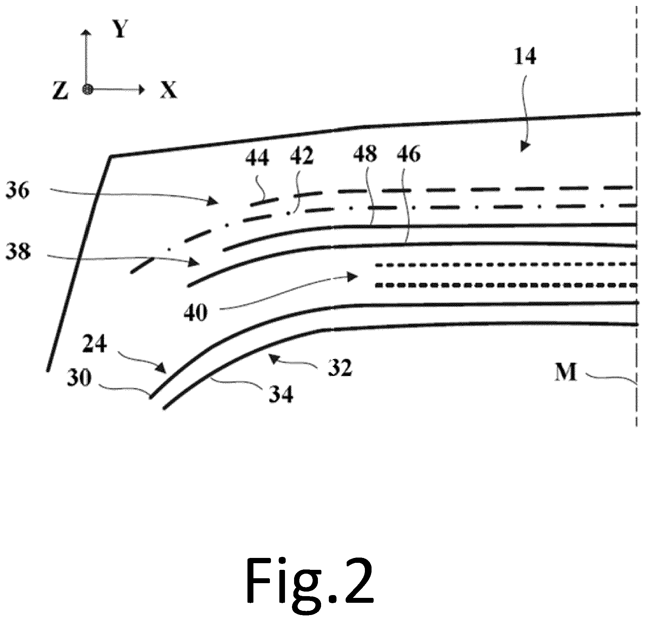

Dans les figures 1 et 2, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet.

On a représenté sur les figures 1 et 2 un pneumatique selon l'invention et désigné par la référence générale 10.

Le pneumatique 10 est pour véhicule lourd de type génie civil, par exemple de type « dumper ». Ainsi, le pneumatique 10 présente une dimension de type 53/80R63.

Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 renforcée par des câbles de carcasse radiaux (non représentés). Les câbles de carcasse sont agencés sensiblement parallèlement les uns aux autres et s'étendent d'un bourrelet 18 à l'autre de manière à former un angle compris entre 80° et 90° avec le plan circonférentiel médian M (plan perpendiculaire à l'axe de rotation du pneumatique qui est situé à mi-distance des deux bourrelets 18 et passe par le milieu de l'armature de sommet 14).

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 40 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 40.

L'armature de protection 36 comprend des première et deuxième nappes de protection 42, 44 comprenant des câbles métalliques de protection, la première nappe 42 étant agencée radialement à l'intérieur de la deuxième nappe 44. De façon optionnelle, les câbles métalliques de protection font un angle au moins égal à 10°, de préférence allant de 10° à 35° et préférentiellement de 15° à 35° avec la direction circonférentielle Z du pneumatique.

L'armature de travail 38 comprend des première et deuxième nappes de travail 46, 48, la première nappe 46 étant agencée radialement à l'intérieur de la deuxième nappe 48.

L'armature additionnelle 40, également appelée bloc limiteur, dont une fonction est de reprendre en partie les sollicitations mécaniques de gonflage, comprend au moins un câble 50 et l'armature additionnelle fait un angle au plus égal à 10°, de préférence allant de 5° à 10° avec la direction circonférentielle Z du pneumatique 10.

### EXEMPLE DE PRODUIT RENFORCE SELON L'INVENTION

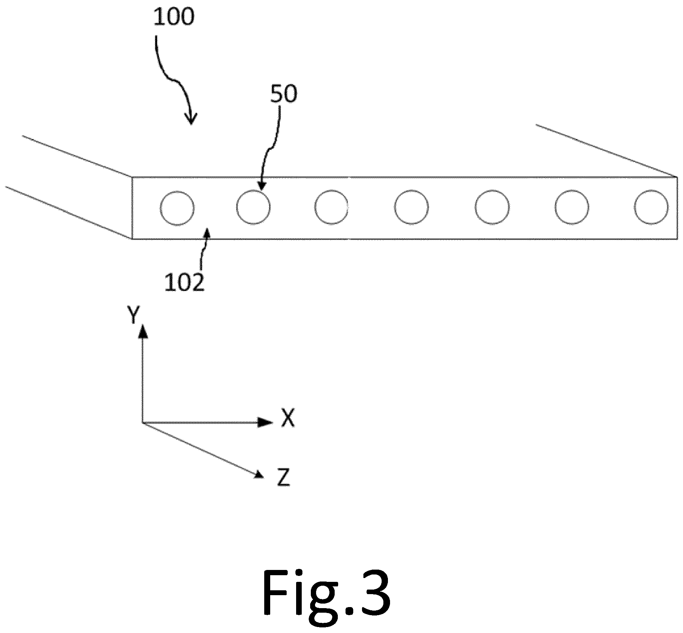

On a représenté sur la figure 3 un produit renforcé selon l'invention et désigné par la référence générale 100. Le produit renforcé 100 comprend au moins un câble 50, en l'espèce plusieurs câbles 50, noyés dans la matrice polymérique 102.

Sur la figure 3, on a représenté la matrice polymérique 102, les câbles 50 dans un repère X, Y, Z dans lequel la direction Y est la direction radiale et les directions X et Z sont les directions axiale et circonférentielle. Sur la figure 3, le produit renforcé 100 comprend plusieurs câbles 50 agencés côte à côte selon la direction principale X et s'étendant parallèlement les uns aux autres au sein du produit renforcé 100 et noyés collectivement dans la matrice polymérique 102.
Ici, la matrice polymérique 102 est une matrice élastomérique à base d'une composition élastomérique.

### CABLE SELON UN PREMIER MODE DE REALISATION DE L'INVENTION

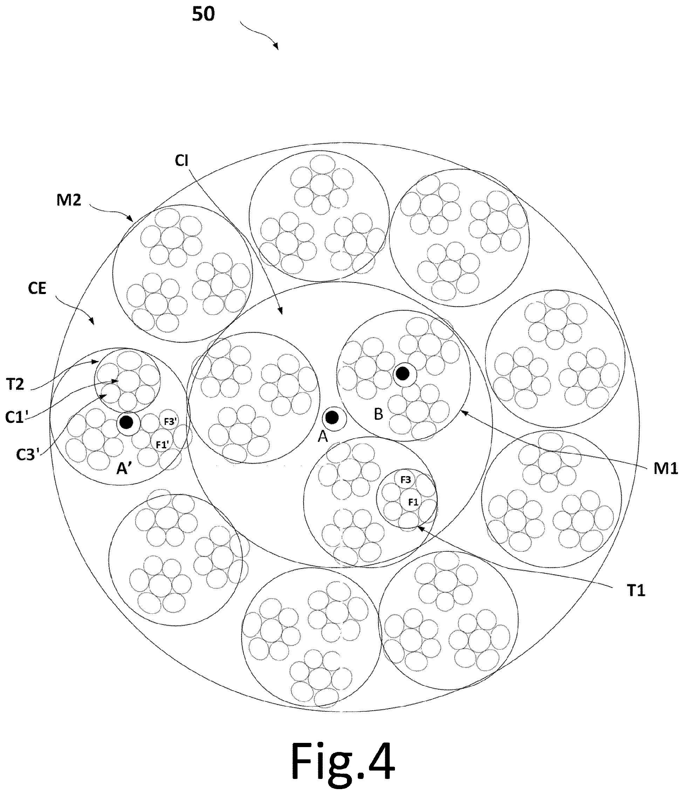

On a représenté sur la figure 4 le câble 50 selon un premier mode de réalisation de l'invention.

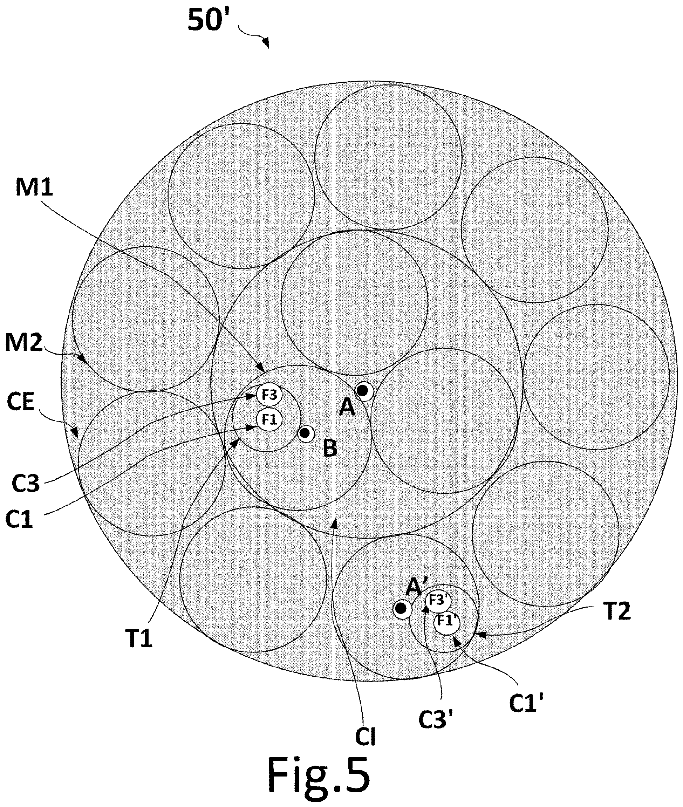

En référence à la figure 5, chaque élément de renfort de l'armature additionnelle est formé, après extraction du pneumatique 10, par un câble extrait 50' tel que décrit ci-dessous. Le câble 50' est obtenu par noyage dans une matrice polymérique, en l'espèce dans une matrice polymérique formant respectivement chaque matrice polymérique de chaque nappe de travail.

Le câble 50 et le câble extrait 50' sont métalliques et du type multi-torons de multi-torons à deux couches cylindriques. Ainsi, on comprend que les couches de multi-torons constituant le câble 50 ou 50' sont au nombre de deux, ni plus, ni moins.

Au moins 50% des fils métalliques, de préférence au moins 60%, plus préférentiellement au moins 70% des fils métalliques, et très préférentiellement chaque fil métallique du câble comprend une âme en acier présentant une composition conforme à la norme NF EN 10020 de septembre 2000 et un taux de carbone C > 0,80% et de préférence C ≥ 0,82 % et au moins 50% des fils métalliques, de préférence au moins 60%, plus préférentiellement au moins 70% des fils métalliques, et très préférentiellement chaque fil métallique du câble comprend une âme en acier présentant une composition conforme à la norme NF EN 10020 de septembre 2000 et un taux de carbone C ≤ 1,20% et de préférence C ≤ 1,10%. Ici chaque fil métallique comprend une âme en acier présentant une composition conforme à la norme NF EN 10020 de septembre 2000 et un taux de carbone C= 0,86%.

Chaque fil présente une résistance à la rupture, notée Rm, telle que 2500 ≤ Rm ≤ 3100 MPa. On dit de l'acier de ces fils qu'il est de grade SHT (« Super High Tensile » ). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

### PROCEDE DE FABRICATION DU CABLE SELON L'INVENTION

Nous allons maintenant décrire un exemple de procédé de fabrication du câble multi-torons de multi-torons 50.

Chaque toron interne T1 précédemment décrit est fabriqué selon des procédés connus comportant les étapes suivantes, opérées préférentiellement en ligne et en continu :
- tout d'abord, une première étape d'assemblage par câblage ou retordage des 6 fils externes F3 autour du fil interne F1 de la couche interne C1 au pas p3 et dans le sens S pour former la couche externe C3 en un premier point d'assemblage ;
- préférentiellement une étape d'équilibrage final des torsions.
Chaque toron externe T2 précédemment décrit est fabriqué selon des procédés connus comportant les étapes suivantes, opérées préférentiellement en ligne et en continu:
- tout d'abord, une première étape d'assemblage par câblage ou retordage des 6 fils externes F3' autour du fil interne F1' de la couche interne C1' au pas p3' et dans le sens S pour former la couche externe C3' en un premier point d'assemblage;
- préférentiellement une étape d'équilibrage final des torsions.

Par « équilibrage de torsion », on entend ici de manière bien connue de l'homme du métier l'annulation des couples de torsion résiduels (ou du retour élastique de torsion) s'exerçant sur chaque fil du toron, dans la couche externe.

Après cette étape ultime d'équilibrage de la torsion, la fabrication du toron est terminée. Chaque toron est enroulé sur une ou plusieurs bobines de réception, pour stockage, avant l'opération ultérieure d'assemblage par retordage des torons élémentaires pour l'obtention du câble multi-torons.

Pour la fabrication des multi-torons de l'invention, on procède de manière bien connue de l'homme du métier, par retordage des torons précédemment obtenus, à l'aide de machines de retordage dimensionnées pour assembler des torons.

Dans une étape de fabrication d'un multi-torons M1, on assemble par câblage les K=3 torons internes T1 au pas P1 et dans le sens S pour former un multi-torons M1 de la couche interne CI en un premier point d'assemblage.

Dans une étape de fabrication de la couche interne CI, on assemble par câblage les X=3 multi-torons M1 au pas pi et dans le sens Z pour former la couche interne CI en un premier point d'assemblage.

Dans une étape de fabrication des multi-torons M2 la couche externe CE, on assemble par câblage les L=3 torons externes T2 au pas P2 et dans le sens S pour former les multi-torons M2 de la couche externe CE en un premier point d'assemblage.

Puis, dans une étape de fabrication ultérieure, on assemble par câblage les Y=9 multi-torons externes M2 autour de la couche interne CI au pas pe et dans le sens Z pour former l'assemblage des couches CI et CE. Eventuellement, dans une dernière étape d'assemblage, on enroule la frette F au pas pf dans le sens S autour de l'assemblage précédemment obtenu.

Le câble 50 est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur allant de 1 et 4 mm. Le pas de calandrage (pas de pose des câbles dans le tissu de composition élastomérique) va de 4 mm à 8 mm.

Ces tissus composites sont ensuite utilisés en tant que nappe de travail dans l'armature de sommet lors du procédé de fabrication du pneumatique, dont les étapes sont par ailleurs connues de l'homme du métier.

### CABLE SELON UN DEUXIEME MODE DE REALISATION DE L'INVENTION

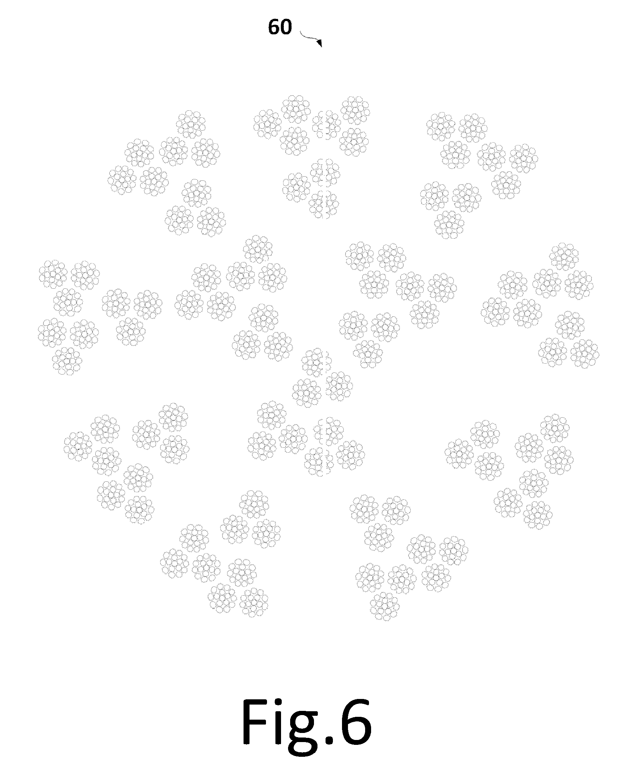

On a représenté sur la figure 6 un câble 60 selon un deuxième mode de réalisation de l'invention.

A la différence du premier mode de réalisation décrit précédemment, le câble 60 selon le deuxième mode de réalisation est tel que Q1=Q1'=1 ; Q2=Q2'=5 et Q3=Q3'=10.

On a résumé dans le tableau 1 ci-dessous les caractéristiques pour les différents câbles 50, 50' et 60.

Pour déterminer la force à rupture d'un câble, on extrait un câble puis on extrait les multi-torons M1 et M2 et on tractionne chacun des multi-torons indépendamment. On somme la force rupture de tous les multi-torons et on multiplie par un coefficient correctif de 90% pour prendre en compte la perte de rendement de la mise en assemblage.

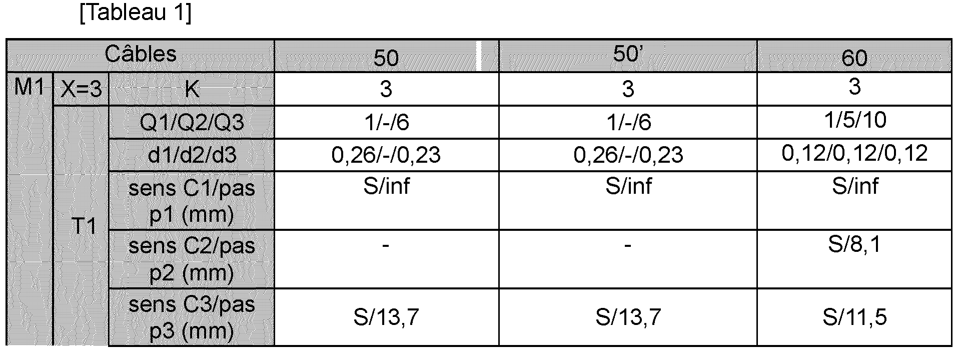

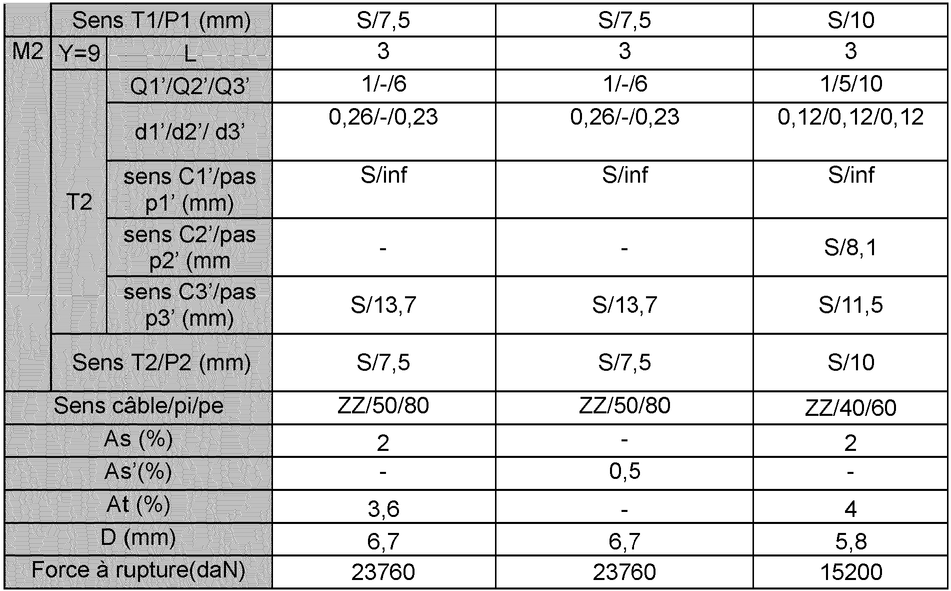

Et on a résumé dans le tableau 2 ci-dessous les caractéristiques pour le câble de l'état de la technique décrit dans le document FR2969181 lettre B.

**[Tableau 2]**

| Câble | EDT |
|---|---|
| (1+6)/sens câble | (1+6)/S |
| sens torons | S |
| Q1 | 3 |
| Q3 | 8 |
| p1 (mm) | 7,7 |
| p2 (mm) | 15,4 |
| Pi (mm) | inf |
| Pe (mm) | 60 |
| At % | 2 |
| As % | 0,1 |
| Force à rupture (daN) | 19600 |

On constate que les câbles 50,50' et 60 selon l'invention permettent d'obtenir un câble avec un allongement suffisant et suffisamment de masse métal et de force à rupture suffisante par rapport au câble de l'état de la technique dans le but d'obtenir un câble avec un bon compromis de rigidité : assez souple pour diminuer la rigidité du bloc sommet avec une force à rupture suffisante pour tenir les sollicitations en extension.

L'invention ne se limite pas aux modes de réalisation précédemment décrits.

## Revendications

1. Câble (50) multi-torons à deux couches de multi-torons, **caractérisé en ce que** le câble (50) comprend :
- une couche interne (CI) du câble constituée de X=3 ou 4 multi-torons (M1) comprenant K=2, 3 ou 4 torons (T1) enroulés en hélice autour d'un axe (B), chaque toron (T1) étant à au moins deux couches (C1, C3) comprenant :
- une couche interne (C1) constituée de Q1 fil(s) métallique(s) interne(s) (F1) de diamètre d1, et
- une couche externe (C3) constituée de Q3 fils métalliques externes (F3) de diamètre d3 enroulés autour de la couche interne (C1); et
- une couche externe (CE) du câble constituée de Y>1 multi-torons (M2) enroulés autour de la couche interne (CI) du câble, chaque multi-torons (M2) comprenant L=2, 3 ou 4 torons (T2) enroulés en hélice autour d'un axe (A'), chaque toron (T2) étant à au moins à deux couches (C1'; C3') comprenant :
- une couche interne (C1') constituée de Q1' fil(s) métallique(s) interne(s) (F1') de diamètre d1', et
- une couche externe (C3') constituée de Q3' fils métalliques externes (F3') de diamètre d3' enroulés autour de la couche interne (C1'),
avec les multi-torons de la couche interne (M1) et de la couche externe (M2) étant enroulés en hélice autour d'un axe principal (A) ,et
le câble (50) présente un allongement structural As tel que As ≥ 1,0%, l'allongement structural As étant déterminé selon la norme ASTM D2969-04 de 2014 au câble (50) de façon à obtenir une courbe force-allongement, l'allongement structural As étant égal à l'allongement, en %, correspondant à l'intersection entre la tangente à la partie élastique de la courbe force-allongement en un point quelconque de sa partie élastique et l'axe des allongements de la courbe force-allongement.

2. Câble (50) selon la revendication précédente, dans lequel As ≥ 1,5% et de préférence As ≥ 2,0%.

3. Câble (50') multi-torons à deux couches de multi-torons extrait d'une matrice polymérique (102), **caractérisé en ce que** le câble extrait (50') comprend :
- une couche interne (CI) du câble constituée de X=3 ou 4 multi-torons (M1) comprenant K=2, 3 ou 4 torons (T1) enroulés en hélice autour d'un axe principal (B), chaque toron (T1) étant à au moins deux couches (C1, C3) comprenant :
- une couche interne (C1) constituée de Q1 fil(s) métallique(s) interne(s) (F1) de diamètre d1, et
- une couche externe (C3) constituée de Q3 fils métalliques externes (F3) de diamètre d3 enroulés autour de la couche interne (C1); et
- une couche externe (CE) du câble constituée de Y>1 multi-torons (M2) enroulés autour de la couche interne (CI) du câble, chaque multi-torons (M2) comprenant L=2, 3 ou 4 torons (T2) enroulés en hélice autour d'un axe (A'), chaque toron (T2) étant à au moins à deux couches (C1'; C3') comprenant :
- une couche interne (C1') constituée de Q1' fil(s) métallique(s) interne(s) (F1') de diamètre d1', et
- une couche externe (C3') constituée de Q3' fils métalliques externes (F3') de diamètre d3' enroulés autour de la couche interne (C1'),
avec les multi-torons de la couche interne (M1) et de la couche externe (M2) étant enroulés en hélice autour d'un axe principal (A) ,et
le câble (50') présente un allongement structural As' tel que As' ≥ 0,3%, l'allongement structural As' étant déterminé selon la norme ASTM D2969-04 de 2014 au câble (50') de façon à obtenir une courbe force-allongement, l'allongement structural As' étant égal à l'allongement, en %, correspondant à l'intersection entre la tangente à la partie élastique de la courbe force-allongement en un point quelconque de sa partie élastique et l'axe des allongements de la courbe force-allongement.

4. Câble (50 ; 50') selon l'une quelconque des revendications précédentes, dans lequel le diamètre D du câble va de 4 mm à 10 mm, de préférence de 5 mm à 8 mm.

5. Câble (50 ; 50') selon l'une quelconque des revendications précédentes, dans lequel les diamètres des fils métalliques (F1 ; F3 ; F1' ; F3') vont indépendamment les uns des autres, de 0,15 mm à 0,50 mm, de préférence de 0,18 mm à 0,35 mm et plus préférentiellement de 0,20 mm à 0,30 mm.

6. Câble (50,50') selon l'une quelconque des revendications précédentes, dans lequel Y est égal à 5, 6, 7, 8, 9 ou 10, de préférence Y=6, 7 ou 8 et plus préférentiellement Y=6.

7. Câble (50,50') selon l'une quelconque des revendications précédentes, dans lequel K= 2, 3 ou 4, de préférence K=3 ou 4.

8. Câble (50,50') selon l'une quelconque des revendications précédentes, dans lequel L= 2,3 ou 4 et de préférence L =3 ou 4.

9. Câble (50 ; 50') selon l'une quelconque des revendications 1 à 8, dans lequel chaque toron (T1) de la couche interne (CI) est à deux couches (C1, C3).

10. Câble (50 ; 50') selon l'une quelconque des revendications 1 à 8, dans lequel chaque toron (T2) de la couche externe (CE) est à deux couches (C1', C3').

11. Câble (60) selon l'une quelconque des revendications 1 à 8, dans lequel chaque toron (T1) de la couche interne (CI) est à trois couches (C1, C2, C3) et comprend :
une couche intermédiaire (C2) constituée de Q2 fils métalliques intermédiaires (F2) enroulés autour de la couche interne (C1), et
une couche externe (C3) constituée de Q3 fils métalliques externes (F3) enroulés autour de la couche intermédiaire (C2).

12. Câble (60) selon l'une quelconque des revendications 1 à 8, dans lequel chaque toron (T2) de la couche externe (CE) est à trois couches (C1', C2', C3') et comprend :
une couche intermédiaire (C2') constituée de Q2' fils métalliques intermédiaires (F2') enroulés autour de la couche interne (C1'), et
une couche externe (C3') constituée de Q3' fils métalliques externes (F3') enroulés autour de la couche intermédiaire (C2').

13. Câble (50 ; 50') selon l'une quelconque des revendications 1 à 10, dans lequel chaque toron (T1 ; T2) des couches interne et externe (CI ; CE) est à deux couches (C1, C3, C1', C3').

14. Produit renforcé (100), **caractérisé en ce qu'**il comprend une matrice polymérique (Ma) et au moins un câble (50') tel que les propriétés de ce câble, mesurées après extraction, sont celles du câble extrait (50') selon l'une quelconque des revendications 3 à 13.

15. Pneumatique (10), **caractérisé en ce qu'**il comprend au moins un câble (50') tel que les propriétés de ce câble, mesurées après extraction du pneumatique, sont celles du câble extrait (50') selon l'une quelconque des revendications 3 à 13 ou un produit renforcé selon la revendication 14.

## Patentansprüche

1. Mehrlitziges Seil (50) mit zwei Lagen aus Mehrlitzeneinheiten, **dadurch gekennzeichnet, dass** das Seil (50) umfasst:
- eine innere Lage (CI) des Seils, die aus X=3 oder 4 Mehrlitzeneinheiten (M1) besteht, die K=2, 3 oder 4 Litzen (T1) umfassen, die helixartig um eine Achse (B) gewunden sind, wobei jede Litze (T1) mindestens zwei Lagen (C1, C3) aufweist, die umfassen:
- eine innere Lage (C1), die aus Q1 inneren Metalldraht/- drähten (F1) mit dem Durchmesser d1 besteht, und
- eine äußere Lage (C3), die aus Q3 äußeren Metalldrähten (F3) mit dem Durchmesser d3 besteht, die um die innere Lage (C1) gewunden sind; und
- eine äußere Lage (CE) des Seils, die aus Y>1 Mehrlitzeneinheiten (M2) besteht, die um die innere Lage (CI) des Seils gewunden sind, wobei jede Mehrlitzeneinheit (M2) L=2, 3 oder 4 Litzen (T2) umfasst, die helixartig um eine Achse (A') gewunden sind, wobei jede Litze (T2) mindestens zwei Lagen (C1'; C3') aufweist, die umfassen:
- eine innere Lage (C1'), die aus Q1' inneren Metalldraht/-drähten (F1') mit dem Durchmesser d1' besteht, und
- eine äußere Lage (C3'), die aus Q3' äußeren Metalldrähten (F3') mit dem Durchmesser d3' besteht, die um die innere Lage (C1') gewunden sind,
wobei die Mehrlitzeneinheiten der inneren Lage (M1) und der äußeren Lage (M2) helixartig um eine Hauptachse (A) gewunden sind, und
wobei das Seil (50) eine derartige strukturelle Dehnung As aufweist, dass As ≥ 1,0 % ist, wobei die strukturelle Dehnung As nach der Norm ASTM D2969-04 von 2014 an dem Seil (50) bestimmt wird, so dass eine Kraft-Dehnungs-Kurve erhalten wird, wobei die strukturelle Dehnung As gleich der Dehnung in % ist, die dem Schnittpunkt zwischen der Tangente an dem elastischen Teil der Kraft-Dehnungs-Kurve in einem beliebigen Punkt ihres elastischen Teils und der Achse der Dehnungen der Kraft-Dehnungs-Kurve entspricht.

2. Seil (50) nach dem vorhergehenden Anspruch, wobei As ≥ 1,5 % ist und bevorzugt As ≥ 2,0 % ist.

3. Mehrlitziges Seil (50') mit zwei Lagen aus Mehrlitzeneinheiten, das aus einer Polymermatrix (102) herausgezogen wurde, **dadurch gekennzeichnet, dass** das herausgezogene Seil (50') umfasst:
- eine innere Lage (CI) des Seils, die aus X=3 oder 4 Mehrlitzeneinheiten (M1) besteht, die K=2, 3 oder 4 Litzen (T1) umfassen, die helixartig um eine Hauptachse (B) gewunden sind, wobei jede Litze (T1) mindestens zwei Lagen (C1, C3) aufweist, die umfassen:
- eine innere Lage (C1), die aus Q1 inneren Metalldraht/- drähten (F1) mit dem Durchmesser d1 besteht, und
- eine äußere Lage (C3), die aus Q3 äußeren Metalldrähten (F3) mit dem Durchmesser d3 besteht, die um die innere Lage (C1) gewunden sind; und
- eine äußere Lage (CE) des Seils, die aus Y>1 Mehrlitzeneinheiten (M2) besteht, die um die innere Lage (CI) des Seils gewunden sind, wobei jede Mehrlitzeneinheit (M2) L=2, 3 oder 4 Litzen (T2) umfasst, die helixartig um eine Achse (A') gewunden sind, wobei jede Litze (T2) mindestens zwei Lagen (C1'; C3') aufweist, die umfassen:
- eine innere Lage (C1'), die aus Q1' inneren Metalldraht/-drähten (F1') mit dem Durchmesser d1' besteht, und
- eine äußere Lage (C3'), die aus Q3' äußeren Metalldrähten (F3') mit dem Durchmesser d3' besteht, die um die innere Lage (C1') gewunden sind,
wobei die Mehrlitzeneinheiten der inneren Lage (M1) und der äußeren Lage (M2) helixartig um eine Hauptachse (A) gewunden sind, und
wobei das Seil (50') eine derartige strukturelle Dehnung As' aufweist, dass As' ≥ 0,3 % ist, wobei die strukturelle Dehnung As' nach der Norm ASTM D2969-04 von 2014 an dem Seil (50') bestimmt wird, so dass eine Kraft-Dehnungs-Kurve erhalten wird, wobei die strukturelle Dehnung As' gleich der Dehnung in % ist, die dem Schnittpunkt zwischen der Tangente an dem elastischen Teil der Kraft-Dehnungs-Kurve in einem beliebigen Punkt ihres elastischen Teils und der Achse der Dehnungen der Kraft-Dehnungs-Kurve entspricht.

4. Seil (50; 50') nach einem der vorhergehenden Ansprüche, wobei der Durchmesser D des Seils 4 mm bis 10 mm, bevorzugt 5 mm bis 8 mm beträgt.

5. Seil (50; 50') nach einem der vorhergehenden Ansprüche, wobei die Durchmesser der Metalldrähte (F1; F3; F1'; F3') unabhängig voneinander 0,15 mm bis 0,50 mm, bevorzugt 0,18 mm bis 0,35 mm und noch bevorzugter 0,20 mm bis 0,30 mm betragen.

6. Seil (50, 50') nach einem der vorhergehenden Ansprüche, wobei Y gleich 5, 6, 7, 8, 9 oder 10 ist, bevorzugt Y=6, 7 oder 8 ist und noch bevorzugter Y=6 ist.

7. Seil (50, 50') nach einem der vorhergehenden Ansprüche, wobei K=2, 3 oder 4 ist, bevorzugt K=3 oder 4 ist.

8. Seil (50, 50') nach einem der vorhergehenden Ansprüche, wobei L=2, 3 oder 4 ist und bevorzugt L=3 oder 4 ist.

9. Seil (50; 50') nach einem der Ansprüche 1 bis 8, wobei jede Litze (T1) der inneren Lage (CI) zwei Lagen (C1, C3) aufweist.

10. Seil (50; 50') nach einem der Ansprüche 1 bis 8, wobei jede Litze (T2) der äußeren Lage (CE) zwei Lagen (C1', C3') aufweist.

11. Seil (60) nach einem der Ansprüche 1 bis 8, wobei jede Litze (T1) der inneren Lage (CI) drei Lagen (C1, C2, C3) aufweist und umfasst:
eine Zwischenlage (C2), die aus Q2 Metallzwischendrähten (F2) besteht, die um die innere Lage (C1) gewunden sind, und
eine äußere Lage (C3), die aus Q3 äußeren Metalldrähten (F3) besteht, die um die Zwischenlage (C2) gewunden sind.

12. Seil (60) nach einem der Ansprüche 1 bis 8, wobei jede Litze (T2) der äußeren Lage (CE) drei Lagen (C1', C2', C3') aufweist und umfasst:
eine Zwischenlage (C2'), die aus Q2' Metallzwischendrähten (F2') besteht, die um die innere Lage (C1') gewunden sind, und
eine äußere Lage (C3'), die aus Q3' äußeren Metalldrähten (F3') besteht, die um die Zwischenlage (C2') gewunden sind.

13. Seil (50; 50') nach einem der Ansprüche 1 bis 10, wobei jede Litze (T1; T2) der inneren und der äußeren Lage (CI; CE) zwei Lagen (C1, C3, C1', C3') aufweist.

14. Verstärktes Produkt (100), **dadurch gekennzeichnet, dass** es eine Polymermatrix (Ma) und mindestens ein Seil (50') umfasst, derart, dass die nach dem Herausziehen gemessenen Eigenschaften dieses Seils diejenigen des herausgezogenen Seils (50') nach einem der Ansprüche 3 bis 13 sind.

15. Reifen (10), **dadurch gekennzeichnet, dass** er mindestens ein Seil (50') umfasst, derart, dass die nach dem Herausziehen aus dem Reifen gemessenen Eigenschaften dieses Seils diejenigen des herausgezogenen Seils (50') nach einem der Ansprüche 3 bis 13 oder eines verstärkten Produkts nach Anspruch 14 sind.

## Claims

1. Multi-strand cord (50) with two multi-strand layers, **characterized in that** the cord (50) comprises:
- a cord internal layer (CI) made up of X=3 or 4 multi-strand elements (M1) comprising K=2, 3 or 4 strands (T1) wound in a helix about an axis (B), each strand (T1) having at least two layers (C1, C3) comprising:
- an internal layer (C1) made up of Q1 internal metal thread(s) (F1) of diameter d1, and
- an external layer (C3) made up of Q3 external metal threads (F3) of diameter d3 wound around the internal layer (C1), and
- a cord external layer (CE) made up of Y>1 multi-strand elements (M2) wound around the internal layer (CI) of the cord, each multi-strand element (M2) comprising L=2, 3 or 4 strands (T2) wound in a helix about an axis (A'), each strand (T2) having at least two layers (C1', C3') comprising:
- an internal layer (C1') made up of Q1' internal metal thread(s) (F1') of diameter d1', and
- an external layer (C3') made up of Q3' external metal threads (F3') of diameter d3' wound around the internal layer (C1'),
the multi-strand elements of the internal layer (M1) and of the external layer (M2) being wound in a helix about a main axis (A), and
the cord (50) has a structural elongation As such that As ≥ 1.0%, the structural elongation As being determined by applying the standard ASTM D2969-04 of 2014 to the cord (50) so as to obtain a force-elongation curve, the structural elongation As being equal to the elongation, in %, corresponding to the intersection between the tangent to the elastic portion of the force-elongation curve at some point along the elastic portion thereof and the elongation axis of the force-elongation curve.

2. Cord (50) according to the preceding claim, wherein As ≥ 1.5% and preferably As ≥ 2.0%.

3. Multi-strand cord (50') with two multi-strand layers, extracted from a polymer matrix (102), **characterized in that** the extracted cord (50') comprises:
- a cord internal layer (CI) made up of X=3 or 4 multi-strand elements (M1) comprising K=2, 3 or 4 strands (T1) wound in a helix about a main axis (B), each strand (T1) having at least two layers (C1, C3) comprising:
- an internal layer (C1) made up of Q1 internal metal thread(s) (F1) of diameter d1, and
- an external layer (C3) made up of Q3 external metal threads (F3) of diameter d3 wound around the internal layer (C1), and
- a cord external layer (CE) made up of Y > 1 multi-strand elements (M2) wound around the internal layer (CI) of the cord, each multi-strand element (M2) comprising L=2, 3 or 4 strands (T2) wound in a helix about an axis (A'), each strand (T2) having at least two layers (C1', C3') comprising:
- an internal layer (C1') made up of Q1' internal metal thread(s) (F1') of diameter d1', and
- an external layer (C3') made up of Q3' external metal threads (F3') of diameter d3' wound around the internal layer (C1'),
the multi-strand elements of the internal layer (M1) and of the external layer (M2) being wound in a helix about a main axis (A), and
the cord (50') has a structural elongation As' such that As' ≥ 0.3%, the structural elongation As' being determined by applying the standard ASTM D2969-04 of 2014 to the cord (50') so as to obtain a force-elongation curve, the structural elongation As' being equal to the elongation, in %, corresponding to the intersection between the tangent to the elastic portion of the force-elongation curve at some point along the elastic portion thereof and the elongation axis of the force-elongation curve.

4. Cord (50; 50') according to any one of the preceding claims, wherein the diameter D of the cord ranges from 4 mm to 10 mm, preferably from 5 mm to 8 mm.

5. Cord (50; 50') according to any one of the preceding claims, wherein the diameters of the metal threads (F1; F3; F1'; F3') range, independently of one another, from 0.15 mm to 0.50 mm, preferably from 0.18 mm to 0.35 mm, and more preferentially, from 0.20 mm to 0.30 mm.

6. Cord (50, 50') according to any one of the preceding claims, wherein Y is equal to 5, 6, 7, 8, 9 or 10, preferably Y=6, 7 or 8 and more preferentially Y=6.

7. Cord (50, 50') according to any one of the preceding claims, wherein K=2, 3 or 4, preferably K=3 or 4.

8. Cord (50, 50') according to any one of the preceding claims, wherein L=2, 3 or 4 and preferably L=3 or 4.

9. Cord (50; 50') according to any one of Claims 1 to 8, wherein each strand (T1) of the internal layer (CI) has two layers (C1, C3).

10. Cord (50; 50') according to any one of Claims 1 to 8, wherein each strand (T2) of the external layer (CE) has two layers (C1', C3').

11. Cord (60) according to any one of Claims 1 to 8, wherein each strand (T1) of the internal layer (CI) has three layers (C1, C2, C3) and comprises:
an intermediate layer (C2) made up of Q2 intermediate metal threads (F2) wound around the internal layer (C1), and
an external layer (C3) made up of Q3 external metal threads (F3) wound around the intermediate layer (C2).

12. Cord (60) according to any one of Claims 1 to 8, wherein each strand (T2) of the external layer (CE) has three layers (C1', C2', C3') and comprises:
an intermediate layer (C2') made up of Q2' intermediate metal threads (F2') wound around the internal layer (C1'), and
an external layer (C3') made up of Q3' external metal threads (F3') wound around the intermediate layer (C2').

13. Cord (50; 50') according to any one of Claims 1 to 10, wherein each strand (T1; T2) of the internal and external layers (Cl; CE) has two layers (C1, C3, C1', C3').

14. Reinforced product (100), **characterized in that** it comprises a polymer matrix (Ma) and at least one cord (50') such that the properties of this cord, measured after extraction, are those of the extracted cord (50') according to any one of Claims 3 to 13.

15. Tyre (10), **characterized in that** it comprises at least one cord (50') such that the properties of this cord, measured after extraction, are those of the extracted cord (50') according to any one of Claims 3 to 13, or a reinforced product according to Claim 14.
